# FASCICULE DE BREVET EUROPEEN

(11) **EP 2 195 239 B1**
(45) Date de publication et mention de la délivrance du brevet: **09.03.2011**
(21) Numéro de dépôt: 08847399.6
(22) Date de dépôt: 28.08.2008
(51) Int. Cl.: B64D 27/26

(54) **ENSEMBLE PROPULSIF POUR AERONEF**
ANTRIEBSVORRICHTUNG FÜR FLUGZEUGE
PROPULSION ASSEMBLY FOR AIRCRAFT

(30) Priorité: 05.10.2007 FR 0707000
(43) Date de publication de la demande: 16.06.2010
(73) Titulaire: Aircelle, 76700 Gonfreville l'Orcher (FR)
(72) Inventeur: BAILLARD, André, F-76110 Bretteville du Grand Caux (FR)
(74) Mandataire: Gaillarde, Frédéric F. Ch.
(86) Numéro de dépôt international: PCT/FR2008/001209
(87) Numéro de publication internationale: WO 2009/060138

(56) Documents cités:
- EP-A- 0 147 878
- EP-A- 1 571 081
- GB-A- 1 504 290
- US-B1- 6 843 449

## Description

La présente invention se rapporte à un ensemble propulsif pour aéronef.

On connaît de la technique antérieure (voir figure 1 ci-annexée), cf. US 6 843 449, un ensemble propulsif pour aéronef comprenant :
- un turboréacteur 1 comportant un carter de soufflante 3 et un carter de moteur 5,
- un pylône 7 de support de ce turboréacteur, et
- un dispositif de suspension de ce turboréacteur sous ce pylône 7 comprenant des bielles de suspension avant 9 s'étendant entre ledit carter de soufflante 3 et ledit pylône 7 dans un plan sensiblement perpendiculaire à l'axe A dudit turboréacteur 1, des bielles de suspension arrière 11 s'étendant entre la partie arrière 13 dudit carter de moteur 5 et ledit pylône 7 dans un plan sensiblement perpendiculaire à l'axe A dudit turboréacteur, et une bielle de reprise de poussée 15 s'étendant entre la partie avant 17 dudit carter de moteur 5 et ledit pylône 7 dans un plan comprenant l'axe A dudit turboréacteur.

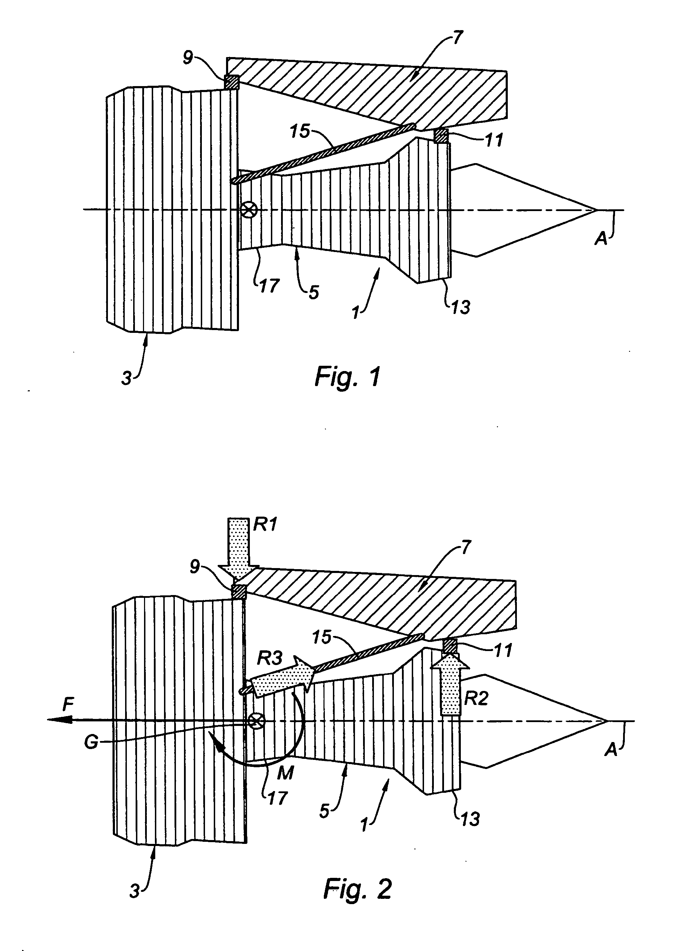

Dans ce système de la technique antérieure, les efforts principaux engendrés par le turboréacteur en fonctionnement normal sont d'une part la force de poussée F (voir figure 2) et d'autre part l'effort aérodynamique appliqué sur l'entrée d'air (non représentée) située en avant du carter de soufflante 3, cet effort aérodynamique engendrant un moment M représenté sur la figure 1 au centre de gravité G du turboréacteur.

Les efforts de réaction permettant d'équilibrer la force de poussée F et le moment M sont principalement : une force de réaction R1, exercée par les bielles de suspension avant 9 sur le carter de soufflante 3 et dirigée vers le bas, une force de réaction R2, exercée par les bielles de suspension arrière 11 sur la partie arrière 13 du carter de moteur 5, et une force de réaction R3, exercée par la bielle de reprise de poussée 15 sur la partie avant 17 du carter de moteur 5.

L'effort R2 exercé sur la partie arrière 13 du carter de moteur 5 traverse la partie arrière du turboréacteur sous forme d'efforts tranchants, ce qui tendance à déformer l'arbre du moteur et ainsi à dégrader les performances de ce moteur, et notamment sa consommation.

La présente invention a notamment pour but de remédier à cet inconvénient.

On atteint ce but de l'invention avec un ensemble propulsif pour aéronef, comprenant :
- un turboréacteur comportant un carter de soufflante et un carter de moteur,
- un pylône de support de ce turboréacteur, et
- un dispositif de suspension de ce turboréacteur sous ce pylône comprenant des bielles de suspension avant s'étendant entre ledit carter de soufflante et ledit pylône dans un plan sensiblement perpendiculaire à l'axe dudit turboréacteur, des bielles de suspension arrière s'étendant entre la partie arrière dudit carter de moteur et ledit pylône dans un plan sensiblement perpendiculaire à l'axe dudit turboréacteur, et une bielle de reprise de poussée s'étendant entre la partie avant dudit carter de moteur et ledit pylône dans un plan comprenant l'axe dudit turboréacteur,
remarquable en ce que ledit dispositif de suspension comprend en outre une bielle complémentaire s'étendant entre ledit carter de soufflante et ledit pylône selon une direction sensiblement parallèle à celle de l'axe dudit turboréacteur.

La présence de cette bielle complémentaire permet de reporter vers l'avant du turboréacteur, c'est-à-dire dans la zone du carter de soufflante et de l'avant du carter de moteur, l'essentiel des efforts de réaction exercés par le dispositif de suspension sur le turboréacteur.

On réduit de la sorte les efforts de réaction transmis par les bielles de suspension arrière, ce qui permet de supprimer le risque de déformation de l'arbre du moteur.

Suivant d'autres caractéristiques optionnelles de l'ensemble propulsif selon l'invention :
- toutes lesdites bielles sont reliées par des rotules à leurs organes respectifs : ceci permet d'obtenir une suspension isostatique du turboréacteur, c'est-à-dire une suspension juste suffisante pour bloquer tous les degrés de liberté (translations selon les trois directions de l'espace et rotations autour de ces trois directions) du turboréacteur par rapport au pylône. L'intérêt d'une telle liaison isostatique est, d'une part, qu'elle permet de connaître avec certitude la nature (directions et intensités) des forces traversant chaque bielle, permettant ainsi un dimensionnement parfaitement approprié de ces bielles, et d'autre part qu'elle ne crée pas de contrainte due à la dilatation thermique ;
- les directions desdites bielles de suspension avant sont sensiblement radiales par rapport à l'axe dudit turboréacteur ;
- lesdites bielles de suspension avant sont disposées de manière sensiblement symétrique par rapport à un plan sensiblement vertical contenant l'axe dudit turboréacteur ;
- les directions desdites bielles de suspension arrière sont sensiblement parallèles entre elles ;
- la direction de l'une desdites bielles de suspension arrière est sensiblement radiale par rapport à l'axe dudit turboréacteur ;
- la direction desdites bielles de suspension arrière est inclinée par rapport à la verticale ;
- au moins l'une desdites bielle de reprise de poussée et bielle complémentaire est inclinée par rapport à l'axe dudit turboréacteur.

La détermination exacte des directions de chacune des bielles de la suspension selon l'invention est effectuée par des outils de calcul informatique dont l'homme du métier dispose de manière habituelle pour dimensionner ses structures, l'objectif étant en l'occurrence d'assurer une bonne répartition des efforts entre toutes les bielles.

D'autres caractéristiques et avantages de la présente invention apparaîtront à la lumière de la description qui va suivre, et à l'examen des figures ci-annexées, dans lesquelles :
- les figures 1 et 2 représentent de manière schématique et en vue de côté, un ensemble propulsif de l'état de la technique, évoqué dans le préambule de la présente description,
- la figure 3 représente de manière schématique et en perspective un ensemble propulsif selon l'invention,
- la figure 4 est une vue partielle et en perspective de l'ensemble propulsif de la figure 3, permettant de visualiser la zone d'attache du pylône de cet ensemble propulsif sur le carter de soufflante d'un turboréacteur,
- la figure 5, analogue à la figure 2, représente de manière schématique un ensemble propulsif selon l'invention, avec les efforts en jeu,
- la figure 6 est une vue schématique en coupe selon la ligne VI-VI de l'ensemble propulsif de la figure 5, et
- la figure 7 est une vue schématique en coupe selon la ligne VII-VII de l'ensemble propulsif de la figure 5.

Sur l'ensemble de ces figures, des références numériques identiques désignent des organes ou ensembles d'organes identiques ou analogues.

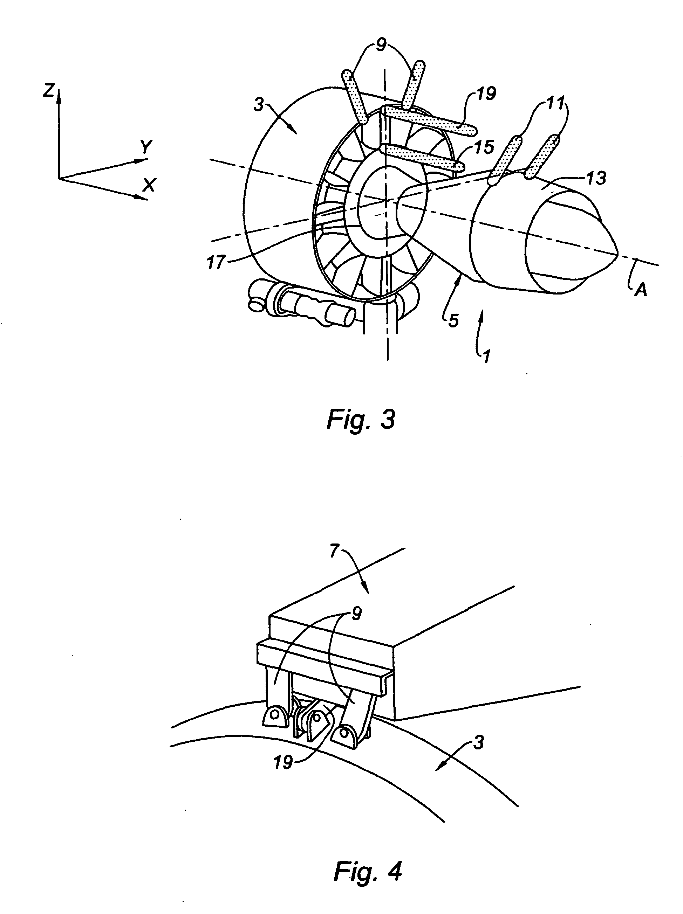

En se reportant aux figures 3 et 4, on peut voir que l'ensemble propulsif selon l'invention comprend une suspension avant formée de deux bielles 9 interposées entre le carter de soufflante 3 et le pylône 7, une suspension arrière formée de deux bielles 11 interposées entre la partie arrière 13 du carter de moteur 5 et le pylône 7, une bielle 15 de reprise des efforts de poussée, interposée entre la partie avant 17 du carter de moteur 5 et le pylône 7.

L'ensemble propulsif selon l'invention comprend en outre une bielle complémentaire 19 interposée entre le carter de soufflante 3 et le pylône 7, et s'étendant selon une direction sensiblement parallèle à celle de l'axe A du moteur.

Comme cela est visible sur la figure 4, cette bielle complémentaire 19 est fixée sur le carter de soufflante 3 entre les deux bielles de suspension avant 9.

L'ensemble des bielles susmentionnées sont reliées à leurs organes respectifs (carter de soufflante 3, carter de moteur 5 et pylône 7) par des liaisons à rotules, c'est-à-dire présentant trois degrés de liberté.

On obtient de la sorte une liaison isostatique entre le pylône 7 et le turboréacteur 1, permettant de connaître avec précision la nature (intensité et direction) des efforts transmis par ces bielles.

On a représenté sur la figure 3 un trièdre X Y Z direct représentant les trois directions de l'espace, nécessaires pour les explications qui suivent.

La direction X de ce trièdre est parallèle à l'axe A du moteur, la direction Y de ce trièdre est perpendiculaire à l'axe de ce moteur et horizontale, et la direction Z de ce trièdre est perpendiculaire à l'axe A du turboréacteur et verticale.

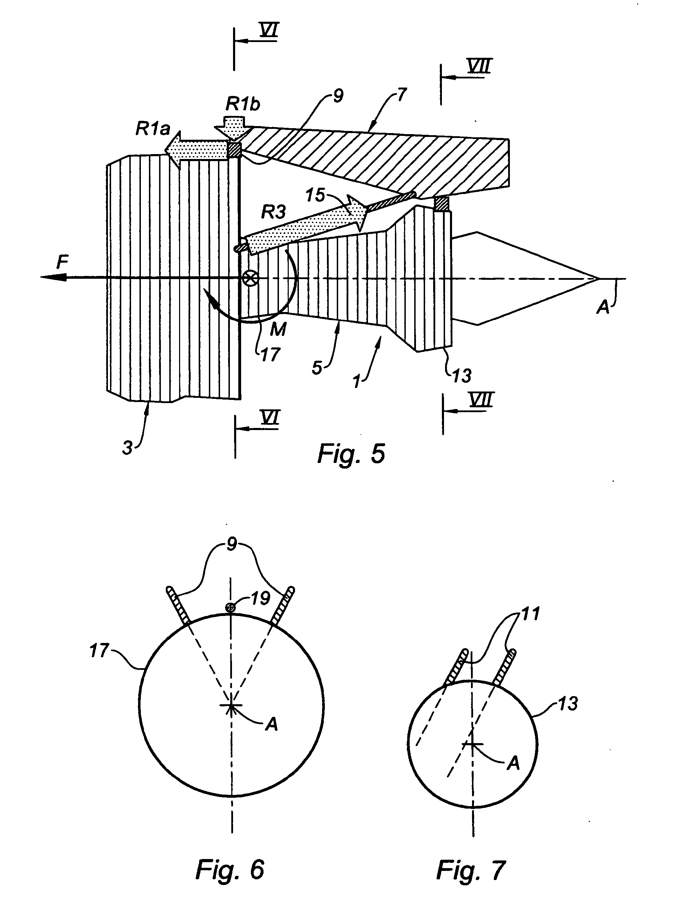

Comme indiqué dans le préambule de la présente description, les efforts principaux engendrés par le turboréacteur 1 par rapport au pylône 7 en fonctionnement normal sont d'une part une force de poussée F orientée vers l'avant du turboréacteur selon la direction X (voir figure 5) et d'autre part un moment M orienté dans le sens de rotation des aiguilles d'une montre autour de l'axe Y.

En réaction à ces efforts, le pylône 7 exerce sur le carter de soufflante 3, par l'intermédiaire de la bielle complémentaire 19, un effort R1a orienté sensiblement selon la direction X, vers l'avant du turboréacteur 1.

Le pylône 7 exerce également sur le carter 3, par l'intermédiaire des deux bielles 9, un effort de réaction R1b, orienté selon la direction verticale Z, vers le bas du turboréacteur 1.

Le pylône 7 exerce également sur la partie avant 17 du carter de moteur 5, par l'intermédiaire de la bielle de reprise de poussée 15, un effort de réaction R3, s'opposant en grande partie à la force de poussée F.

Les efforts de réaction transmis par les bielles 11 de la suspension arrière sont nettement inférieurs à ceux d'un ensemble propulsif de l'état de la technique.

La bielle complémentaire 19 permet en effet de reprendre la majeure partie des efforts engendrés par le moment M, les bielles 11 n'ayant quant à elles plus qu'à reprendre des efforts provenant de la rotation du moteur, et des déplacements latéraux du moteur (moments autour des axes X et Z, et force orientée selon la direction Y).

Les bielles 11 de la suspension arrière n'ont donc plus à encaisser l'effort considérable de réaction verticale R2 présent dans un dispositif de l'état de la technique (voir figure 2), engendré par le moment M de rotation du turboréacteur autour de l'axe Y.

Comme on peut donc le comprendre, l'invention permet de déporter dans la zone du carter de soufflante 3 et de l'avant 17 du carter de moteur 5 l'essentiel des efforts de réaction exercés par le dispositif de suspension sur le turboréacteur 1 ; on soulage de la sorte l'arrière 13 du carter de moteur 5 d'efforts importants susceptibles de conduire à une déformation de l'arbre du moteur du turboréacteur.

Des simulations informatiques ont démontré que, compte tenu de l'ensemble des efforts entrant en jeu (force selon les trois directions X Y et Z, et moments autour de ces trois directions), une disposition symétrique et sensiblement radiale (c'est-à-dire dont le prolongement imaginaire se coupe au voisinage de l'axe A du turboréacteur 1, comme représenté sur la figure 6) des deux bielles de la suspension avant 9, permettait d'obtenir une optimisation de la répartition des efforts entre ces bielles.

De même, la disposition des deux bielles 11 de la suspension arrière telle que représentée sur la figure 7, se révèle particulièrement avantageuse.

Dans cette disposition, les deux bielles 11 sont parallèles entre elles et inclinées par rapport à la verticale, l'une de ces bielles présentant une orientation sensiblement radiale.

Il apparaît que cette disposition particulière des bielles 11 réalise un bon compromis entre une bonne résistance aux moments du couple moteur (autour de l'axe X) et une stabilité satisfaisante vis-à-vis des efforts latéraux (direction Y).

Il est à noter que l'inclinaison de la bielle 15 par rapport à l'axe du turboréacteur 1 peut varier typiquement dans une plage allant de 0° à 20°, selon les cas de figure rencontrés (géométrie et poids du pylône et du turboréacteur, contraintes à prendre en compte, etc.).

On a pu constater que la suspension selon l'invention présentait une forte robustesse vis-à-vis des variations d'inclinaison des bielles qui la constituent.

Ainsi par exemple, une variation d'angle de 20° dans la bielle de reprise de poussée 15 n'entraîne qu'une augmentation de 5 % des efforts repris par cette bielle.

Une variation angulaire de quelques degrés autour de la direction radiale pour chacune des bielles 9 de la suspension avant n'est pas critique, et permet d'optimiser la répartition d'efforts dans les bielles 11 de la suspension arrière vis-à-vis des efforts latéraux, c'est-à-dire orientés selon la direction Y.

Une légère dissymétrie angulaire des deux bielles 9 formant la suspension avant est acceptable.

Une variation angulaire de quelques degrés pour les deux bielles 11 de la suspension arrière modifie peu la répartitions d'efforts.

Bien entendu, la présente invention n'est nullement limitée au mode de réalisation décrit et représenté, fourni à titre de simple exemple.

## Revendications

1. Ensemble propulsif pour aéronef, comprenant :
- un turboréacteur (1) comportant un carter de soufflante (3) et un carter de moteur (5),
- un pylône (7) de support de ce turboréacteur (1), et
- un dispositif de suspension de ce turboréacteur sous ce pylône comprenant des bielles de suspension avant (9) s'étendant entre ledit carter de soufflante (3) et ledit pylône (7) dans un plan sensiblement perpendiculaire à l'axe (A) dudit turboréacteur (1), des bielles de suspension arrière (11) s'étendant entre la partie arrière (13) dudit carter de moteur (5) et ledit pylône (7) dans un plan sensiblement perpendiculaire à l'axe (A) dudit turboréacteur (1), et une bielle de reprise de poussée (15) s'étendant entre la partie avant (17) dudit carter de moteur (5) et ledit pylône (7) dans un plan comprenant l'axe (A) dudit turboréacteur (1),
**caractérisé en ce que** ledit dispositif de suspension comprend en outre une bielle complémentaire (19) s'étendant entre ledit carter de soufflante (3) et ledit pylône (7) selon une direction sensiblement parallèle à celle de l'axe (A) dudit turboréacteur.

2. Ensemble propulsif selon la revendication 1, **caractérisé en ce que** toutes lesdites bielles (9, 11, 15, 19) sont reliées par des rotules à leurs organes respectifs (3, 13, 17).

3. Ensemble propulsif selon l'une des revendications 1 ou 2, **caractérisé en ce que** les directions desdites bielles de suspension avant (9) sont sensiblement radiales par rapport à l'axe (A) dudit turboréacteur (1).

4. Ensemble propulsif selon l'une quelconque des revendications précédentes, **caractérisé en ce que** lesdites bielles de suspension avant (9) sont disposées de manière sensiblement symétrique par rapport à un plan sensiblement vertical contenant l'axe (A) dudit turboréacteur (1).

5. Ensemble propulsif selon l'une quelconque des revendications précédentes, **caractérisé en ce que** les directions desdites bielles de suspension arrière (11) sont sensiblement parallèles entre elles.

6. Ensemble propulsif selon la revendication 5, **caractérisé en ce que** la direction de l'une desdites bielles (11) de suspension arrière est sensiblement radiale par rapport à l'axe (A) dudit turboréacteur (1).

7. Ensemble propulsif selon l'une des revendications 5 ou 6, **caractérisé en ce que** la direction desdites bielles de suspension arrière (11) est inclinée par rapport à la verticale.

8. Ensemble propulsif selon l'une quelconque des revendications précédentes, **caractérisé en ce que** ladite bielle de reprise de poussée (15) est inclinée par rapport à l'axe (A) dudit turboréacteur (1).

## Claims

1. A propulsion assembly for an aircraft, comprising:
- a turbojet engine (1) including a fan casing (3), and an engine casing (5),
- a pylon (7) for supporting this turbojet engine (1), and.
- a device for suspending this turbojet engine under this pylon comprising front suspension connecting rods (9), extending between said fan casing (3) and said pylon (7) in a plane substantially perpendicular to the axis (A) of said turbojet engine (1), rear suspension connecting rods (11), extending between the rear portion (13) of said engine casing (5) and said pylon (7) in a plane substantially perpendicular to the axis (A) of said turbojet engine (1), and a thrust acceleration connecting rod (15), extending between the front portion (17) of said engine casing (5) and said pylon (7) in a plane comprising the axis (A) of said turbojet engine (1),
**characterized in that** said suspension device further comprises an additional connecting rod (19), extending between said fan casing (3) and said pylon (7) along a direction substantially parallel to that of the axis (A) of said turbojet engine.

2. The propulsion assembly according to claim 1, **characterized in that** all said connecting rods (9, 11, 15, 19) are connected through ball joints to their respective members (3, 13, 17).

3. The propulsion assembly according to any of claims 1 or 2, **characterized in that** the directions of said front suspension connecting rods (9) are substantially radial with respect to the axis (A) of said turbojet engine (1).

4. The propulsion assembly according to any of the preceding claims, **characterized in that** said front suspension connecting rods (9), are positioned substantially symmetrically with respect to a substantially vertical plane containing the axis (A) of said turbojet engine (1).

5. The propulsion assembly according to any of the preceding claims, **characterized in that** the directions of said rear suspension connecting rods (11) are substantially parallel to each other.

6. The propulsion assembly according to claim 5, **characterized in that** the direction of one of said rear suspension connecting rods (11) is substantially radial with respect to the axis (A) of said turbojet engine (1).

7. The propulsion assembly according to any of claims 5 or 6, **characterized in that** the direction of said rear suspension connecting rods (11) is tilted with respect to the vertical.

8. The propulsion assembly according to any of the preceding claims, **characterized in that** said thrust acceleration connecting rod (15) is tilted with respect to the axis (A) of said turbojet engine (1).

## Patentansprüche

1. Antriebsgruppe für Luftfahrzeug, die umfasst:
- ein Turbotriebwerk (1), das ein Gebläsegehäuse (3) und ein Motorgehäuse (5) aufweist,
- einen Stützmast (7) dieses Turbotriebwerks (1) und
- eine Aufhängevorrichtung dieses Turbotriebwerks unter diesem Mast, die vordere Aufhängestangen (9) umfasst, die sich zwischen dem Gebläsegehäuse (3) und dem Mast (7) in einer etwa senkrechten Ebene zur Achse (A) des Turbotriebwerks (1) erstrecken, hintere Aufhängestangen (11), die sich zwischen dem hinteren Abschnitt (13) des Motorgehäuses (5) und dem Mast (7) in einer etwa senkrechten Ebene zur Achse (A) des Turbotriebwerks (1) erstrecken und eine Schubübernahmestange (15), die sich zwischen dem vorderen Abschnitt (17) des Motorgehäuses (5) und dem Mast (7) in einer Ebene erstreckt, die die Achse (A) des Turbotriebwerks (1) umfasst,
**dadurch gekennzeichnet, dass** die Aufhängevorrichtung weiterhin eine komplementäre Stange (19) umfasst, die sich zwischen dem Gebläsegehäuse (3) und dem Mast (7) in eine Richtung etwa parallel zu der der Achse (A) des Turbotriebwerks erstreckt.

2. Antriebsgruppe nach Anspruch 1, **dadurch gekennzeichnet, dass** alle Stangen (9, 11, 15, 19) mit ihren entsprechenden Organen (3, 13, 17) durch Kugelgelenke verbunden sind.

3. Antriebsgruppe nach einem der Ansprüche 1 oder 2, **dadurch gekennzeichnet, dass** die Richtungen der vorderen Aufhängestangen (9) etwa radial im Verhältnis zur Achse (A) des Turbotriebwerks (1) sind.

4. Antriebsgruppe nach einem der vorangehenden Ansprüche, **dadurch gekennzeichnet, dass** die vorderen Aufhängestangen (9) etwa symmetrisch im Verhältnis zu einer etwa vertikalen Ebene angeordnet sind, die die Achse (A) des Turbotriebwerks (1) enthält.

5. Antriebsgruppe nach einem der vorangehenden Ansprüche, **dadurch gekennzeichnet, dass** die Richtungen der hinteren Aufhängestangen (11) etwa parallel zueinander sind.

6. Antriebsgruppe nach Anspruch 5, **dadurch gekennzeichnet, dass** die Richtung einer der hinteren Aufhängestangen (11) etwa radial im Verhältnis zur Achse (A) des Turbotriebwerks (1) ist.

7. Antriebsgruppe nach einem der Ansprüche 5 oder 6, **dadurch gekennzeichnet, dass** die Richtung der hinteren Aufhängestangen (11) im Verhältnis zur Vertikalen geneigt ist.

8. Antriebsgruppe nach einem der vorangehenden Ansprüche, **dadurch gekennzeichnet, dass** die Schubübernahmestange (15) im Verhältnis zur Achse (A) des Turbotriebwerks (1) geneigt ist.
